# EUROPÄISCHE PATENTSCHRIFT

(11) **EP 0 913 192 B1**
(45) Veröffentlichungstag und Bekanntmachung des Hinweises auf die Patenterteilung: **16.04.2003**
(21) Anmeldenummer: 97810809.0
(22) Anmeldetag: 30.10.1997
(51) Int. Cl.: B01J 19/32

(54) **Stoffaustauschkolonne mit einer Packung**
Mass exchange column with a packing
Colonne d'échange de matière avec un garnissage

(43) Veröffentlichungstag der Anmeldung: 06.05.1999
(73) Patentinhaber: Sulzer Chemtech AG, 8404 Winterthur (CH)
(72) Erfinder: Hug, Albert, 8400 Winterthur (CH); Heiniger, Fritz, 8488 Turbenthal (CH); Moser, Felix, 8408 Winterthur (CH)
(74) Vertreter: Sulzer Management AG

(56) Entgegenhaltungen:
- WO-A-96/40428
- FR-A- 2 676 371
- US-A- 5 456 865

## Beschreibung

Die Erfindung betrifft eine Stoffaustauschkolonne mit einer Packung gemäss Oberbegriff von Anspruch 1. Sie bezieht sich auch auf einen Packungskragen einer derartigen Kolonne und auf ein Verfahren zum Installieren und/oder Transportieren der Kolonne.

Aus der EP-A 0 601 257 ist eine Stoffaustauschkolonne bekannt, deren Packung auf verschiedenen Höhen von Kranzelementen umgürtet ist. Die Kranzelemente - hier kurz Krägen genannt - sind aus dünnen Blechen hergestellt und dienen zur Lenkung der Stoffströme in der Kolonne. Einerseits wird ein Gasstrom daran gehindert, in einem Ringspalt neben der Packung entlang der Kolonnenwand zu strömen. Das Gas wird in die Packung gelenkt, wo es mit einer auf der Packung fliessenden Flüssigkeit in Kontakt tritt. Andererseits wird Flüssigkeit, die von der Packung auf die Kolonnenwand gelangt, durch die Krägen zurück in die Packung geleitet.

Die in der EP-A 0 601 257 genannten Packungen sind in der Regel aus einer Mehrzahl von Füllkörpern aufgebaut. In einer besonders vorteilhaften Ausführungsform weist ein Füllkörper parallel angeordnete, in Kolonnenachse gerichtete Lagen aus gewellten Lamellen mit sich offen kreuzenden Kanälen auf. Bei grossen Kolonnendurchmessern sind die einzelnen Füllkörper aus mehreren Segmenten zusammengesetzt. Üblicherweise werden solche Packungen Füllkörper für Füllkörper in eine vertikal stehende Kolonne eingebaut; mit jedem Füllkörper wird gleichzeitig mindestens ein Kragen in den Ringspalt am Rand der Packung eingelegt. Bei der Installation der Packung, d.h. bei deren Einbau in die Kolonne, müssen die Krägen mit Sorgfalt behandelt werden. Es müssen Deformationen vermieden werden, welche die Lenkfunktion der Krägen beeinträchtigen würden.

Die genannte Packung mit sich offen kreuzenden Kanälen lässt auch eine Installation zu, wenn die Kolonne in horizontaler Lage ist. Eine solche Installation ist vorteilhaft und zwar besonders dann, wenn die Packung - wie beispielsweise bei der Herstellung von Rektifizierkolonnen für die Luftzerlegung - an einem ersten Ort installiert wird und der Betrieb der Kolonne an einem zweiten Ort vorgesehen ist. Beim Ortswechsel muss die Kolonne horizontal liegend transportiert werden. Damit durch den Transport die Einbauten der Kolonne nicht beschädigt werden, sind Massnahmen zu treffen. Die aus dünnem Blech gefertigten Krägen sind beim Transport am meisten gefährdet. Auch bilden die Krägen bereits bei der Installation der Packung ein Problem. Es ist daher Aufgabe der Erfindung, Mittel zu schaffen, welche bei horizontal ausgerichteter Kolonne die Installation der Packung und den Transport der Kolonne erlauben. Diese Aufgabe wird durch eine Kolonne mit geeignet ausgebildeten Krägen gemäss Anspruch 1 gelöst.

Die Stoffaustauschkolonne enthält eine Packung, die in horizontaler Lage der Kolonne installierbar ist. Die

Die Stoffaustauschkolonne enthält eine Packung, die in horizontaler Lage der Kolonne installierbar ist. Die Kolonne weist zwischen Packung und Kolonnenwand einen Ringspalt auf, in dem Krägen angeordnet sind. Diese umfassen jeweils einen bandförmigen, an die Packung anliegenden Bereich. Am oberen Rand des bandförmigen Bereichs schliessen federelastisch verbunden Flächenstücke an, die zur Wand eine Überbrückung herstellen und die für eine Flüssigkeitsrückleitung von der Wand zur Packung während des Betriebs der Kolonne vorgesehen sind. Zumindest für einen Teil der Krägen gilt erfindungsgemäss, dass diese in ihren bandförmigen Bereichen Erhebungen aufweisen, die bei horizontal liegender Kolonne unter der Last der Packung formstabil den Ringspalt geöffnet halten.

Weitere Krägen für Stoffaustauschkolonnen sind in WO-A-9 640 428 und US-A-5 456 865 beschrieben

Die abhängigen Ansprüche 2 bis 7 betreffen vorteilhafte Ausführungsformen der erfindungsgemässen Kolonne. Gegenstand des Anspruchs 8 ist der geeignet ausgebildete Kragen selbst. Der Anspruch 9 bezieht sich auf das Installieren der Packung.

Nachfolgend wird die Erfindung anhand der Zeichnungen erläutert. Es zeigen:
- Fig. 1: einen Längsschnitt durch eine liegende Kolonne gemäss der Erfindung, bei der Installation der Packung,
- Fig. 2: ausschnittsweise die Kolonne der Fig.1 in perspektivischer Darstellung und mit Blick in Richtung der Kolonnenachse,
- Fig. 3: einen Abschnitt eines erfindungsgemässen Kragens,
- Fig. 4: einen Längsschnitt durch den Randbereich der Kolonne mit dem Kragen der Fig.3,
- Fig. 5: eine zweite Ausführungsform des Kragens,
- Fig. 6: eine Darstellung von noppenförmigen Erhebungen von drei weiteren Ausführungsformen,
- Fig. 7: eine sechste Ausführungsform des Kragens und
- Fig.8-10: Darstellungen zu einer siebten Ausführungsform.

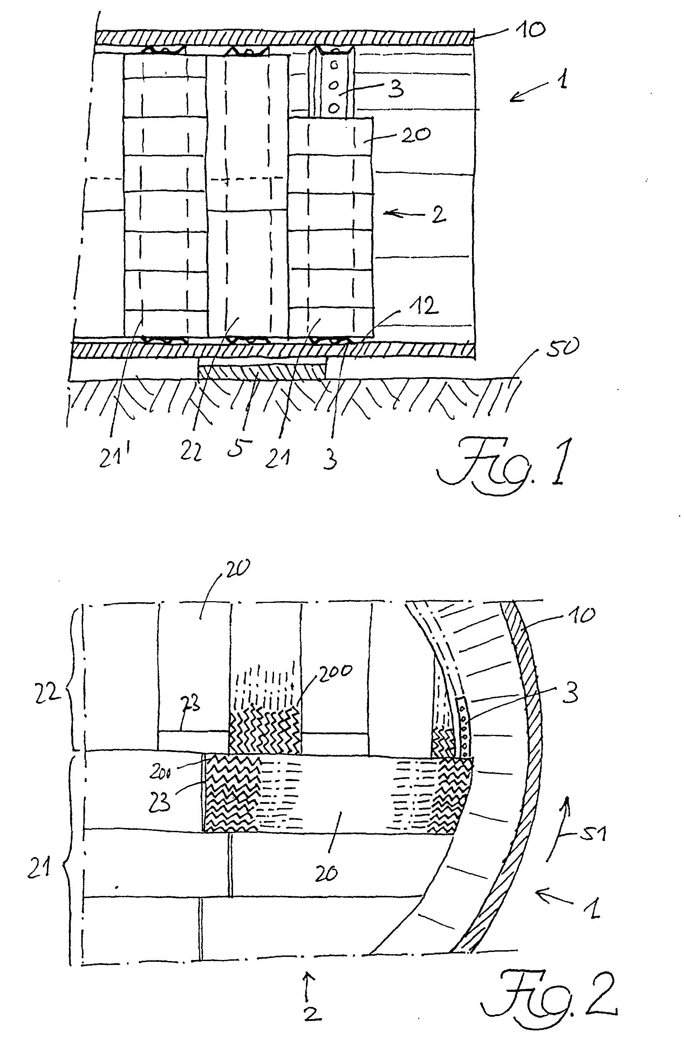

Die Stoffaustauschkolonne 1 in Fig.1 bzw. Fig.2 enthält eine aus Segmenten 20 zusammengesetzte Packung 2, wobei die Packung 2 erst teilweise eingebaut ist. In einem Ringspalt 12 zwischen Kolonnenwand 10 und Packung 2 sind Krägen 3 eingelegt. Die Segmente 20 setzen sich jeweils aus einem Stapel von gewellten Lamellen 200 zusammen, die sich offen kreuzende Kanäle bilden. Aus den Segmenten 20 aufgebaute Füllkörper 21, 22 und 21' stellen eine weitere Unterteilung der Packung 2 dar. Die Lamellen 200 benachbarter Füllkörper 21 und 22 oder 22 und 21' sind quer zu einander gerichtet. Lücken 23 bei Stossstellen zwischen benachbarten Segmenten 20 werden mit Vorteil gefüllt, beispielsweise durch Einfügen von Streckgittern. Mit solchen Elementen wird einerseits die Lage der Segmente gesichert; andererseits wird mit ihnen ein zusätzlicher Teil der Packung gebildet.

Von dem in Fig.2 sichtbaren Kragen 3 ist erst ein Teilstück eingelegt. Ein zusätzlich einzulegendes Teilstück ist strichpunktiert angedeutet. Die Krägen 3 können an der Kolonnenwand 10 oder an der Packung 2 befestigt werden. Mit Vorteil bilden sie jedoch separate Bauteile, die nur aufgrund von Feder- und Reibkräften im Randspalt 12 festgehalten werden. Die folgenden Figuren zeigen Ausführungsbeispiele solcher Krägen 3.

Die Kolonne 1 liegt horizontal und lagert auf Trägern 5, die auf dem Fussboden 50 stehen. Mit Vorteil ist die Kolonne 1 auf Rollen gelagert (nicht dargestellt), die ein Drehen der Kolonne (Pfeil 51) um ihre Achse ermöglichen. So kann die Kolonne nach dem Einbau eines Füllkörpers 22 jeweils um beispielsweise 90° gedreht werden, um für den Einbau des nachfolgenden Füllkörpers 21 eine günstige Stellung aufzuweisen.

Die Krägen dürfen unter der Last der Füllkörper 21, 22 nicht zerdrückt werden. Bei dieser Last handelt es sich um eine maximale Last, die durch Beschleunigungskräfte während eines Transportes der Kolonne entstehen. Die Beschleunigung während Erschütterungen können rund das Vierfache der Erbeschleunigung g betragen. Mittels abstandhaltenden Bauteilen, die zusätzlich eingelegt werden können, liesse sich dieses Problem lösen. Solche Hilfsmittel verteuern aber die Herstellung der Kolonne; und ausserdem können sie sich als Störquellen bei der Durchführung des Stoffaustauschprozesses herausstellen. Eine weit vorteilhaftere Lösung ist durch die erfindungsgemässe Massnahme gegeben, nämlich in den Krägen selbst Strukturelemente vorzusehen, die verhindern, dass die Belastung durch die Packung bleibende Deformationen zur Folge hat.

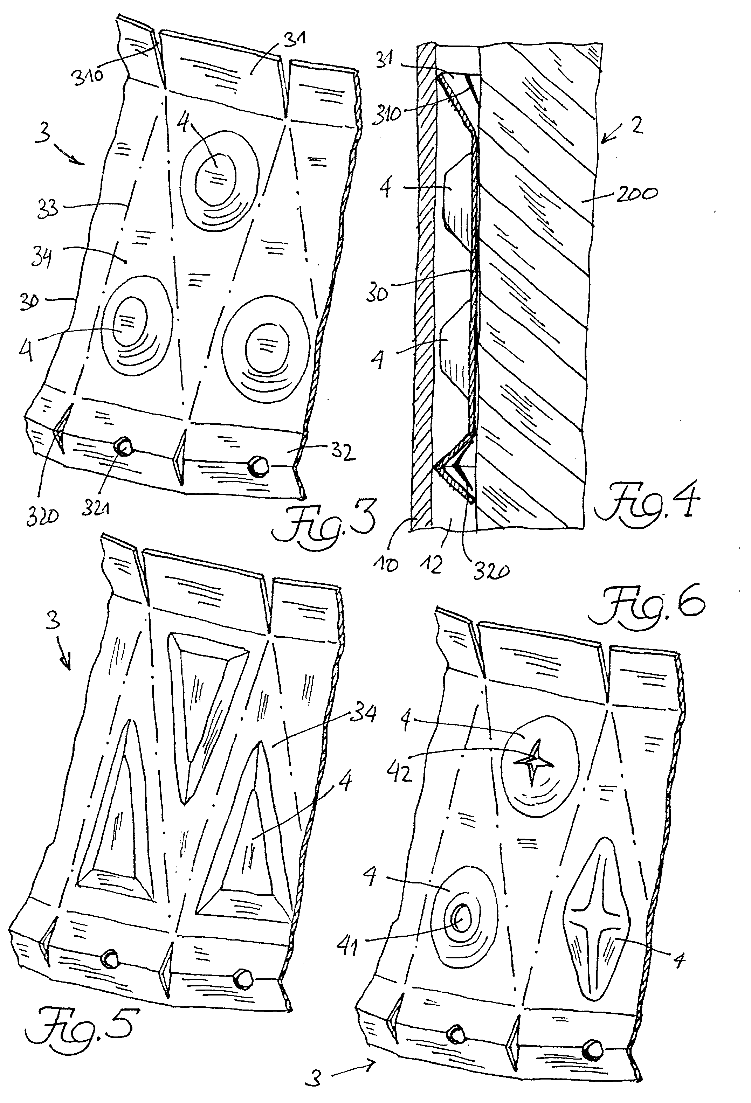

Die in den Figuren 3 bis 7 dargestellten Krägen 3 sind erfindungsgemässe Weiterbildungen des in der EP-A 0 601 257 offenbarten und dort in Fig.5 und Fig.8b dargestellten Kranzelements. Der im Ringspalt 12 zwischen Packung 2 (gewellte Lamelle 200) und Kolonnenwand 10 angeordnete Kragen 3 - siehe Figuren 3 und 4 - umfasst einen bandförmigen, an die Packung 2 anliegenden Bereich 30. Am oberen Rand dieses Bereichs 30 schliessen Flächenstücke 31 an, die zur Wand 10 eine Überbrückung herstellen und die für eine Flüssigkeitsrückleitung von der Wand 10 zur Packung 2 während des Betriebs der Kolonne 1 vorgesehen sind. Am unteren Rand des bandförmigen Bereichs 30 ist ein Faltteil 32 mit Einschnitten 320 und Durchbrüchen 321 angeordnet. Der Faltteil 32 und die Flächenstücke 31 sind Teile eines Bleches aus einem federelastischen Material. Dieses Blechstück ist so ausgebildet, dass der Kragen 3 aufgrund von Federkräften im Ringspalt 12 einspannbar ist.

Einschnitte 310 zwischen den Flächenstücken 31 sind gegenüber den Einschnitten 320 im Faltteil 32 versetzt angeordnet. (Die Einschnitte 310 und 320 können auch anders angeordnet sein.) Durch die Krümmung des Kragens 3 im Ringspalt 12 ergeben sich gerade Biegelinien 33 zwischen den Einschnitten 310 und 320, die Teilflächen 34 mit der Form von gleichschenkligen Dreiecken aufspannen. In den Innenbereichen dieser Teilflächen 34 sind noppenförmige Erhebungen 4 durch Prägung oder Tiefziehen angebracht. Sie versteifen die Teilflächen 34, beeinträchtigen aber das Biegen entlang den Linien 33 nicht. Diese Erhebungen 4 halten bei horizontal liegender Kolonne 1 den Ringspalt 12 formstabil geöffnet. Die Blechdicke des Kragens 3 und die Anzahl sowie Verteilung der Erhebungen 4 sind so ausgelegt, dass unter einer maximalen Last der Packung 2 die Erhebungen 4 praktisch keine bleibende Deformation erleiden. Eine geringe Deformation ist tolerierbar, wenn die Lenkfunktion der Krägen erhalten bleibt. Bei vertikal stehender Kolonne brauchen die Erhebungen 4 die Wand 10 nicht zu berühren.

Der Kragen 3, der die Packung 2 vollständig umgürtet, besteht aus einem Stück, das den ganzen Umfang der Packung 2 umschliesst; oder er ist aus zwei oder mehr Stücken zusammengesetzt. Jedes Stück ist aus tiefziehbarem Stahlblech hergestellt, vorzugsweise aus einem Blech mit einer Dicke im Bereich von rund 0,1 bis 0,3 mm. Die Erhebungen 4 sind noppenförmig ausgebildet und in zwei zueinander versetzten Reihen längs des bandförmigen Bereichs 30 angeordnet, wobei die Abstände zwischen benachbarten Erhebungen einer Reihe im Bereich von 2 bis 8 cm, vorzugsweise rund 4 cm, liegen.

Beim Beispiel der Fig.5 sind die Erhebungen 4 der Form der Teilflächen 34 entsprechend als stumpfe Pyramiden mit drei Seitenflächen ausgebildet. In Fig.6 ist neben zwei anderen Beispielen eine weitere Pyramidenform der Erhebung 4 zu sehen.

Beim Tiefziehen der noppenförmigen Erhebungen 4 können Risse im Blech entstehen. Zur Vermeidung von Rissen kann an den höchsten Stellen der Erhebungen 4 jeweils ein Durchbruch vorgesehen werden: beispielsweise eine Ausstanzung 41 oder eine Einschneidung 42, wie es in Fig.6 illustriert ist.

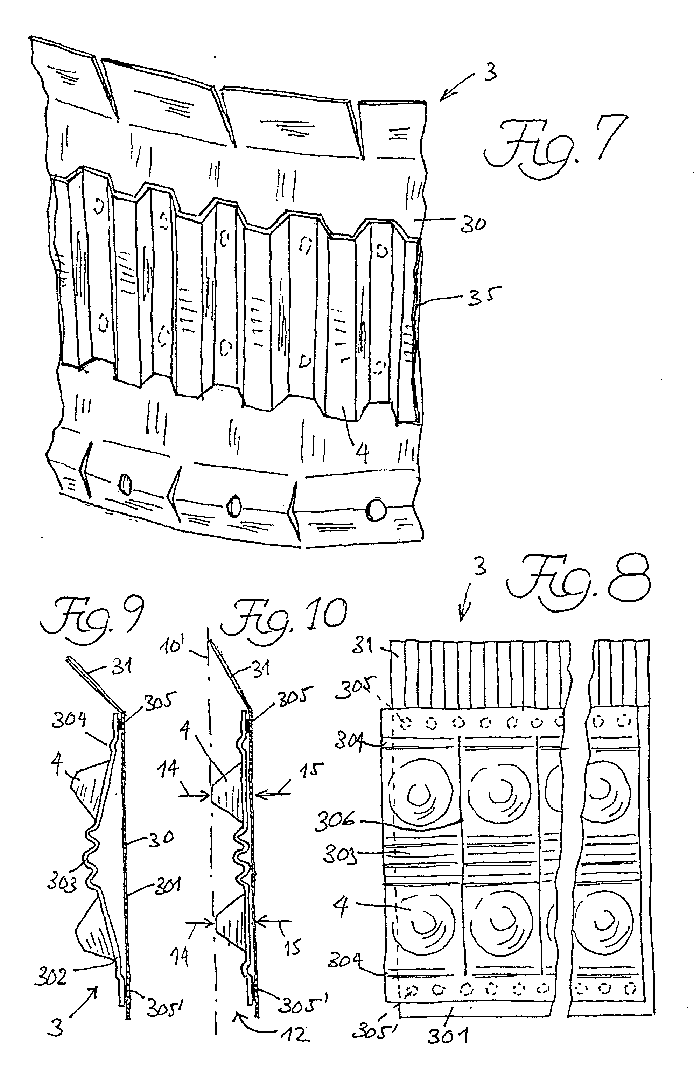

Der bandförmige Kragenbereich 30 kann auch zweilagig ausgebildet sein, oder zumindest teilweise zweilagig sein: siehe das sechste Ausführungsbeispiel in Fig.7 und das siebte Ausführungsbeispiel in den Figuren 8 bis 10. Die der Kolonnenwand 10 nähere Lage 35 bzw. 302 ist mit den Erhebungen 4 strukturiert, in Fig.7 mit ausgefalteten Rippen, beim siebten Beispiel wieder mit Noppen.

Beim Beispiel der Figuren 8 bis 10 (Fig.8: Draufsicht; Fig.9, 10: Seitenansicht) wird die Stofflenkfunktion von einer dünnen Folie 301 übernommen, an deren oberen Ende schmale Flächenstücke 31 für eine Überbrückung des Ringspalts 12 sorgen, die - verglichen mit breiten Flächenstücken 31 - einen dichteren Kontakt mit der gebogenen Wandoberfläche 10' herstellen. Die Erhebungen 4 sind in ein zweites, wesentlich dickeres Blech 302 eingeprägt. Die beiden Lagen 301 und 302 sind durch Punktschweissungen 305, 305' miteinander verbunden. Dank Federbereichen 303 und 304 kann die zweite Lage 302 gegen die erste Lage 301 gepresst werden; dabei wird der bandförmige Bereich 30 zwischen den Schweisspunkten 305 und 305' gespannt und eventuell gestreckt. Fig.9 zeigt die entspannte Form des Kragens 3, Fig.10 die gespannte. Der Pfeil 15 deutet eine durch die Packung 2 ausgeübte Druckkraft an, der Pfeil 14 die entsprechende Gegenkraft der Kolonnenwand 2, die auf den Noppen 4 wirkt. In der Lage 302 sind Schlitze 306 vorgesehen, die sich bei der Installation der Packung 2 der Krümmung des Ringspalts 12 entsprechend leicht öffnen.

Es sind Anlagen mit Stoffaustauschkolonnen bekannt, die auf Schiffen oder schwimmenden Plattformen eingesetzt werden. Wegen des schwankenden Bodens, auf dem diese Kolonnen stehen, sind deren Packungen ähnlichen mechanischen Belastungen wie bei einem Transport der Kolonne unterworfen. Daher sind die erfindungsgemässen Krägen auch in diesem Anwendungsfeld mit Vorteil verwendbar.

## Patentansprüche

1. Stoffaustauschkolonne (1) mit einer geordneten Packung (2), die in horizontaler Lage der Kolonne installierbar ist, welche Kolonne zwischen Packung und Kolonnenwand (10) einen Ringspalt (12) aufweist, in dem Krägen (3) angeordnet sind, die jeweils einen bandförmigen, an die Packung anliegenden Bereich (30) umfassen, wobei zumindest ein Teil der Krägen in ihren bandförmigen Bereichen Erhebungen (4) aufweisen,
**dadurch gekennzeichnet, dass** die gebogenen, im Ringspalt (12) angeordneten Krägen (3) in ihren bandförmigen Bereichen (30) jeweils Teilflächen (34) aufweisen, die durch gerade Biegelinien (33) begrenzt sind, wobei die Biegelinien vom oberen zum unteren Rand des bandförmigen Bereichs führende Strecken bilden, dass die Erhebungen (4) in den Innenbereichen dieser Teilflächen angeordnet sind und dass die Erhebungen formstabil sind, so dass sie bei horizontal liegender Kolonne den Ringspalt unter der Last der Packung geöffnet halten.

2. Stoffaustauschkolonne nach Anspruch 1, **dadurch gekennzeichnet, dass** am oberen Rand des bandförmigen Bereichs zwischen ersten Einschnitten (310) Flächenstücke (31) anschliessen, die zur Wand (10) eine Überbrückung herstellen, und dass am unteren Rand des bandförmigen Bereichs ein Faltteil (32) mit zweiten Einschnitten (320) angeordnet ist, wobei die ersten Einschnitte gegenüber den zweiten Einschnitten versetzt angeordnet sind.

3. Stoffaustauschkolonne nach Anspruch 1 oder 2, **dadurch gekennzeichnet, dass** die bandförmigen Kragenbereiche (30) zumindest teilweise aus verformbarem Blech bestehen und das Blech geeignet gewählt ist, so dass die formstabilen Erhebungen (4) durch Umformen dieser Bleche erzeugbar sind.

4. Stoffaustauschkolonne nach einem der Ansprüche 1 bis 3, **dadurch gekennzeichnet, dass** die bandförmigen Kragenbereiche (30) zumindest teilweise zweilagig ausgebildet sind und dass die der Kolonnenwand (10) nähere Lage (35; 302) mit den Erhebungen (4) strukturiert ist.

5. Stoffaustauschkolonne nach einem der Ansprüche 1 bis 4, **dadurch gekennzeichnet, dass** die Krägen (3) zwischen Wand (10) und Packung (2) allein aufgrund von Feder- und Reibkräften fixierbar sind, wobei die Federkräfte durch geeignet geformte Teile (31, 32) der Krägen (3) erzeugbar sind.

6. Stoffaustauschkolonne nach einem der Ansprüche 1 bis 5, **dadurch gekennzeichnet, dass** die Erhebungen (4) Noppen in einem Blech sind, deren höchsten Stellen jeweils einen Durchbruch (41, 42) aufweisen.

7. Stoffaustauschkolonne nach einem der Ansprüche 1 bis 6, **dadurch gekennzeichnet, dass** die Packung (2) aus Füllkörpern (21, 22) aufgebaut ist, die jeweils parallel angeordnete, in Kolonnenachse gerichtete Lagen aus gewellten Lamellen (200) mit sich offen kreuzenden Kanälen enthalten.

8. Kragen (3) zu der Packung (2) einer Stoffaustauschkolonne (1) gemäss einem der Ansprüche 1 bis 7, **dadurch gekennzeichnet, dass** er aus einem Stück besteht oder aus Stücken zusammengesetzt ist, dass jedes Stück einen bandförmigen Bereich mit Erhebungen (4) umfasst, an dessen oberen Rand federelastisch verbunden Flächenstücke (31) anschliessen, die zur Wand (10) der Kolonne (1) eine Überbrückung herstellen und die für eine Flüssigkeitsrückleitung von der Wand zur Packung während des Betriebs der Kolonne vorgesehen sind, und dass ferner jedes Stück aus tiefziehbarem Stahlblech hergestellt ist - vorzugsweise aus einem Blech mit einer Dicke im Bereich von rund 0,1 bis 0,3 mm - und die Erhebungen (4) noppenförmig ausgebildet und in zwei zueinander versetzten Reihen längs des bandförmigen Bereichs (30) angeordnet sind, wobei die Abstände zwischen benachbarten Erhebungen einer Reihe im Bereich von 2 bis 8 cm, vorzugsweise rund 4 cm, liegen.

9. Verfahren zur Installation einer Packung (2) in einer Stoffaustauschkolonne (1) gemäss einem der Ansprüche 1 bis 7, **dadurch gekennzeichnet, dass** die leere Kolonne in eine horizontale Lage gebracht wird und danach die Krägen (3) sowie die in Segmente (20) unterteilte Packung in die Kolonne eingebaut werden, wobei Lücken an Stossstellen zwischen Segmenten mit Vorteil gefüllt werden, beispielsweise durch Einfügen von Streckgittern.

## Claims

1. Material exchange column (1) comprising an ordered packing (2) which can be installed in a horizontal position of the column, said column having a ring gap (12) between the packing and the column wall (10) in which collars (3) are arranged which each comprise a band shaped region (30) which lies in contact with the packing,with at least some of the collars having elevations (4) in their band-shaped regions **characterised in that** the bent collars (3) which are arranged in the ring gap (12) each have subsurfaces (34) bounded by straight bend lines (33) in their band-shaped regions (30), with the bend lines forming paths extending from the upper margin to the lower margin of the band-shaped region; **in that** the elevations (4) are arranged in the inner regions of these subsurfaces and **in that** the elevationsare of stable shape so that they hold the ring gap open under the load of the packing when the column lies horizontally.

2. Material exchange column in accordance with claim 1, **characterised in that** areal elements (31) adjoin the upper margin fo the band-shaped region between first cuts (310) and form a bridge to the wall (10) and **in that** a folder part (32) with second cuts (320) is arranged at the lower margin of the band-shaped region, with the first cuts being offset relative to the second cuts.

3. Material exchange column in accordance with claim 1 or claim 2 **characterised in that** the band-shaped collar regions (30) consist at least partially of deformable sheet metal; and **in that** the sheet metal is suitably chosen so that the elevations (4) are produced by deformation of these metal sheets.

4. Material exchange column in accordance with one of the claims 1 to 3 **characterised in that** the band-shaped collar regions (30) are at least partially formed in two layers; and **in that** the layer (35; 302) which is nearer the column wall (10) is structured with the elevations (4).

5. Material exchange column in accordance with one of the claims 1 to 4 **characterised in that** the collars (3) are fixed between the wall (10) and the packing (2) only as a result of spring and frictional forces, with the spring forces being produced by suitably formed parts (31, 32) of the collars (3).

6. Material exchange column in accordance with one of the claims 1 to 5 **characterised in that** the elevations (4) are knobs in a metal sheet, the highest points of which each have an aperture (41, 42).

7. Material exchange column in accordance with one of the claims 1 to 6 **characterised in that** the packing (2) is built up of filler bodies (21, 22), which in each case contain layers of corrugated lamella (200) which are arranged in parallel, are directed in the direction of direction of the column axis and have openly crossing channels.

8. Collar (3) for the packing (2) of a material exchange column (1) in accordance with one of the claims 1 to 7 **characterised in that** it consists of one piece or is assembled from pieces; **in that** each piece comprises a band shaped region with elevations (4) the upper margin of which is adjoined by elastically connected areal elements (31) which produce a bridge to the wall (10) of the column (1) and which are provided for a return conduction of the liquid from the wall to the packing during the operation of the column; and, furthermore, **in that** each piece is manufactured of deep drawing sheet steel― preferably of a sheet steel with a thickness in the range from about 0.1 to 0.3 mm_ and **in that** the elevations (4) are formed in knob shape and are arranged in two mutually displaced rows along the band-shaped region (30), with the distances between adjacent elevations in a row lying in the range from 2 to 8 cm, preferably about 4 cm.

9. Method for the installation of a packing (2) in a material exchange column (1) in accordance with one of the claims 1 to 7 **characterised in that** the empty column is brought into a horizontal position and afterwards the collars (3) and also the packing, which is subdivided into segments (20), are built into the column, with gaps at interface positions between segments being advantageously filled, for example through the insertion of expandable grids.

## Revendications

1. Colonne d'échange de matière (1) avec un garnissage ordonné (2) qui peut être installé dans la position horizontale de la colonne, ladite colonne présentant entre le garnissage et la paroi (10) de la colonne une fente annulaire (12) dans laquelle sont disposés des collets (3) qui entourent respectivement une zone en forme de bande (30) s'appliquant au garnissage, où au moins une partie des collets présente dans leurs zones en forme de bande des surélévations (4), **caractérisée en ce que** les collets courbés (3) disposés dans la fente annulaire (12) présentent dans leurs zones en forme de bande (30) respectivement des faces partielles (34) qui sont délimitées par des lignes de flexion rectilignes (33), où les lignes de flexion forment des chemins menant du bord supérieur au bord inférieur de la zone en forme de bande, **en ce que** les surélévations (4) sont disposées dans les zones intérieures de ces faces partielles et **en ce que** les surélévations sont d'une forme stable de telle sorte que lorsque la colonne s'étend horizontalement, elles maintiennent à l'état ouvert la fente annulaire sous la charge du garnissage.

2. Colonne d'échange de matière selon la revendication 1, **caractérisée en ce que** font suite au bord supérieur de la zone en forme de bande entre des premières entailles (310) des pièces de face (31) qui établissent relativement à la paroi (10) un pont, et **en ce qu'**il est disposé au bord inférieur de la zone en forme de bande une pièce de pliage (32) avec de secondes entailles (320), où les premières entailles sont décalées par rapport aux secondes entailles.

3. Colonne d'échange de matière selon la revendication 1 ou 2, **caractérisée en ce que** les zones de collet (30) en forme de bande sont constituées au moins partiellement d'une tôle déformable et que la tôle est sélectionnée d'une manière appropriée de façon que les surélévations (4) d'une forme stable peuvent être produites par une déformation de ces tôles.

4. Colonne d'échange de matière selon l'une des revendications 1 à 3, **caractérisée en ce que** les zones de collet (30) en forme de bande sont réalisées au moins partiellement en deux couches et **en ce que** la couche (35, 302) plus proche de la paroi de colonne (10) est structurée avec les surélévations (4).

5. Colonne d'échange de matière selon l'une des revendications 1 à 4, **caractérisée en ce que** les collets (3) entre la paroi (10) et le garnissage (2) peuvent être fixés uniquement en raison de forces élastiques et de frottement, où les forces élastiques peuvent être produites par des parties (31, 32) formées d'une manière appropriée des collets (3).

6. Colonne d'échange de matière selon l'une des revendications 1 à 5, **caractérisée en ce que** les surélévations (4) sont des tétons dans une tôle dont les emplacements les plus hauts présentent respectivement un perçage (41, 42).

7. Colonne d'échange de matière selon l'une des revendications 1 à 6, **caractérisée en ce que** le garnissage (2) est constitué de corps de remplissages (21, 22) qui contiennent respectivement des couches de lamelles ondulées (200) disposées parallèlement, dirigées dans l'axe de la colonne, avec des canaux ouverts qui se croisent.

8. Collet (3) pour le garnissage (2) d'une colonne d'échange de matière (1) selon l'une des revendications 1 à 7, **caractérisé en ce qu'**il est constitué d'une pièce ou qu'il est constitué de pièces, **en ce que** chaque pièce comprend une zone en forme de bande avec des surélévations (4) au bord supérieur de laquelle font suite des pièces de face (31) reliées avec une élasticité de ressort qui réalisent relativement à la paroi (10) de la colonne (1) un pont et qui sont prévues pour un retour du liquide de la paroi vers le garnissage pendant le fonctionnement de la colonne, et **en ce qu'**en outre chaque pièce est réalisée en une tôle d'acier pouvant être emboutie, de préférence en une tôle d'une épaisseur au voisinage d'environ 0,1 à 0,3 mm, et **en ce que** les surélévations (4) sont réalisées en forme de téton et sont disposées selon deux rangées décalées l'une relativement à l'autre le long de la zone en forme de bande (30), où les écarts entre des surélévations avoisinantes d'une rangée se situent dans la plage de 2 à 8 cm, de préférence à environ 4 cm.

9. Procédé d'installation d'un garnissage (2) dans une colonne d'échange de matière (1) selon l'une des revendications 1 à 7, **caractérisé en ce que** la colonne vide est amenée dans une position horizontale et qu'ensuite les collets (3) ainsi que le garnissage divisé en segments (20) sont montés dans la colonne, où des espaces à des emplacements de joint entre des segments sont remplis avantageusement, par exemple en insérant des grilles d'étirage.
